(19) Europäisches Patentamt
European Patent Office
Office européen des brevets

(11) Publication number: **0 015 761**
**B1**

(12) **EUROPEAN PATENT SPECIFICATION**

(45) Date of publication of patent specification: **05.02.86**

(51) Int. Cl.$^4$: **C 08 G 8/18,** C 08 G 8/22, C 09 J 3/16, C 07 C 65/05

(21) Application number: **80300702.0**

(22) Date of filing: **07.03.80**

(54) **Polymer, preparation and formulations for preparation thereof and use for production of bonded materials.**

(30) Priority: **09.03.79 GB 7908451**

(43) Date of publication of application:
**17.09.80 Bulletin 80/19**

(45) Publication of the grant of the patent:
**05.02.86 Bulletin 86/06**

(84) Designated Contracting States:
**DE FR GB IT SE**

(56) References cited:
**DE-B-1 131 228**
**FR-A-1 559 267**
**GB-A- 283 803**
**GB-A- 625 385**
**GB-A- 630 758**
**GB-A- 732 711**
**GB-A- 824 144**
**US-A-3 078 314**

**Sogo Shikensho Nempo 38, pp. 273-278 (1978)**
**Chemical Abstracts, vol. 93, abstract 26060g, (1980)**

(73) Proprietor: **Hawkes, Anthony Jack**
**19 Coombe Crescest**
**Thame, Oxfordshire (GB)**
(73) Proprietor: **Durrani, Aziz Ahmed**
**30 Boyne Road**
**London NW4 (GB)**
(73) Proprietor: **Tyman, John Henry Paul**
**150 Palewell Park**
**London SW14 (GB)**

(72) Inventor: **Hawkes, Anthony Jack**
**19 Coombe Crescest**
**Thame, Oxfordshire (GB)**
Inventor: **Durrani, Aziz Ahmed**
**30 Boyne Road**
**London NW4 (GB)**
Inventor: **Tyman, John Henry Paul**
**150 Palewell Park**
**London SW14 (GB)**

(74) Representative: **Allen, Oliver John Richard et al**
**Lloyd Wise, Tregear & Co. Norman House**
**105-109 Strand**
**London, WC2R 0AE (GB)**

**EP 0 015 761 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to polymers, to their preparation and to their use as bonding agents in the production of bonded particulate or fibrous material. In particular the invention relates to polymers containing carboxylate groups which are formed by polymerizing certain carboxyl-containing phenols with aldehydes.

Proposals have hitherto been made to produce particle board by using as a binder a polymer of cashew nut shell liquid (CNSL) with an aldehyde (e.g. GB—A—625,384; GB—A—283,803). Such processes have however required the use of organic and chlorinated solvents which may be undesirably toxic, inflammable or expensive.

It has now been found that similar polymers may be obtained in which the use of such solvents is obviated.

Therefore according to the invention there is provided a polymer containing carboxylate groups characterised in that it is formed by polymerization of a water-soluble salt of a compound of the formula:

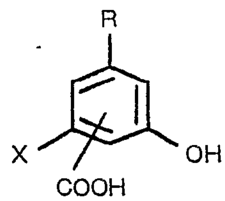

(I)

in which

R represents $C_{15}H_{31-n}$, $C_{17}H_{35-n}$ or $C_{11}H_{23}$ in which n is 0, 2, 4 or 6, and

X represents H or OH,

with an aldehyde.

The polymer of the invention may be used in the preparation of bonded particulate or fibrous materials to effect the bond between the particles and/or fibres.

The compounds of formula (I) are generally naturally occurring materials. For example, pelandjauic acid, the compound in which X is H, R is $C_{17}H_{35-n}$ and the COOH is ortho to R and OH, is present in latex extracted from certain trees. Anagigantic acid, the compound in which X is H, R is $C_{11}H_{23}$ and the COOH is ortho to R and OH is present in the nutshells obtained from the tree *Anacardium giganteum.* A particularly preferred compound of formula (I) is anacardic acid, in which X is H, R is $C_{15}H_{31-n}$ and the COOH is ortho to R and OH, which is obtained from the outer shell of the cashew nut obtained from the cashew nut shell tree, *Anacardium occidentale.*

Cashew nut shell liquid (CNSL) is extracted from the outer shell of the cashew nut obtained from the cashew nut tree, *Anacardium occidentale,* after the kernels have been removed by freezing and fracturing. In the shell CNSL comprises anacardic acid (2-carboxy-3-pentadecadienyl phenol) at a level exceeding 70% and related acids of different degrees of unsaturation, together with cardol (*m*-pentadecadienyl resorcinol).

There are two main processes for extracting CNSL. According to one process a cold solvent extraction is conducted on the shells, for example as disclosed in United States Patent Specification No. 1 954 650 and in J. H. P. Tyman, J. Chem. Soc. Perkin I Trans. 1973, 1639. Cold solvent extracted CNSL consists essentially of anacardic acid and minor amounts of cardol. This liquid may be used directly for the production of a polymer of the invention providing an alkali metal hydroxide is present to form the salt in situ. Alternatively the liquid may be pre-treated to form the salt. Cardol and other constituents which are non-carboxylic, may be incorporated into the polymer as component units or may also contribute to the bonding properties of the product as separate polymers produced by polymerization with the aldehyde. For example, the cardol may be present in the polymer in amounts of 15% or more.

According to the second process CNSL is extracted from the shells by a heating process which results in decarboxylation of the acids so that the material obtained contains cardanol

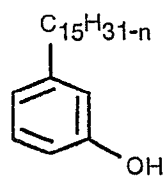

and cardol

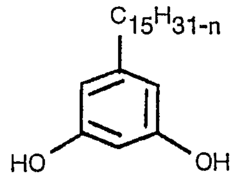

and related compounds of varying degrees of unsaturation.

This liquid is referred to herein as Technical CNSL. Whilst cardanol and cardol alone are not suitable for preparing the polymers of the invention it has been found that these compounds may be carboxylated using the Kolbe reaction. Conditions for conducting the Kolbe Schmitt reaction are disclosed in A. S. Lindsey and H. Jeskey, Chem. Rev., 1957, *57*, 483. The compounds are treated with carbon dioxide at elevated temperature, generally above 100°C preferably above 150°C usually under pressure and sometimes in the presence of a solvent. The compounds are preferably treated in the form of an alkali metal salt of the phenol or under suitably alkaline conditions. Suitable solvents include diglym and dimethyl formamide; water is not preferred although cardol is less affected than cardanol by its presence in the carboxylation. It is desirable to keep the reaction temperature below 200°C since decarboxylation occurs in excess of this temperature. The products of the Kolbe reaction on cardanol and cardol are essentially 4-pentadecyl-salicyclic acid and 5-pentadecylresorcinol-2-carboxylic acid respectively, i.e. the carboxylate group is introduced into the para-position relative the $C_{15}H_{31-n}$ chain. These compounds are suitable for use in the preparation of polymers of the invention.

If desired cold extracted CNSL may be subjected to the Kolbe reaction to yield a mixture containing a high proportion of anacardic acid and 5-pentadecylresorcinol-2-carboxylic acid. It is also possible to separate the components of CNSl by fractionation if it is desired to use specific compounds for the preparation of the polymers.

The various compounds which may be derived from CNSL may be expressed schematically as follows:

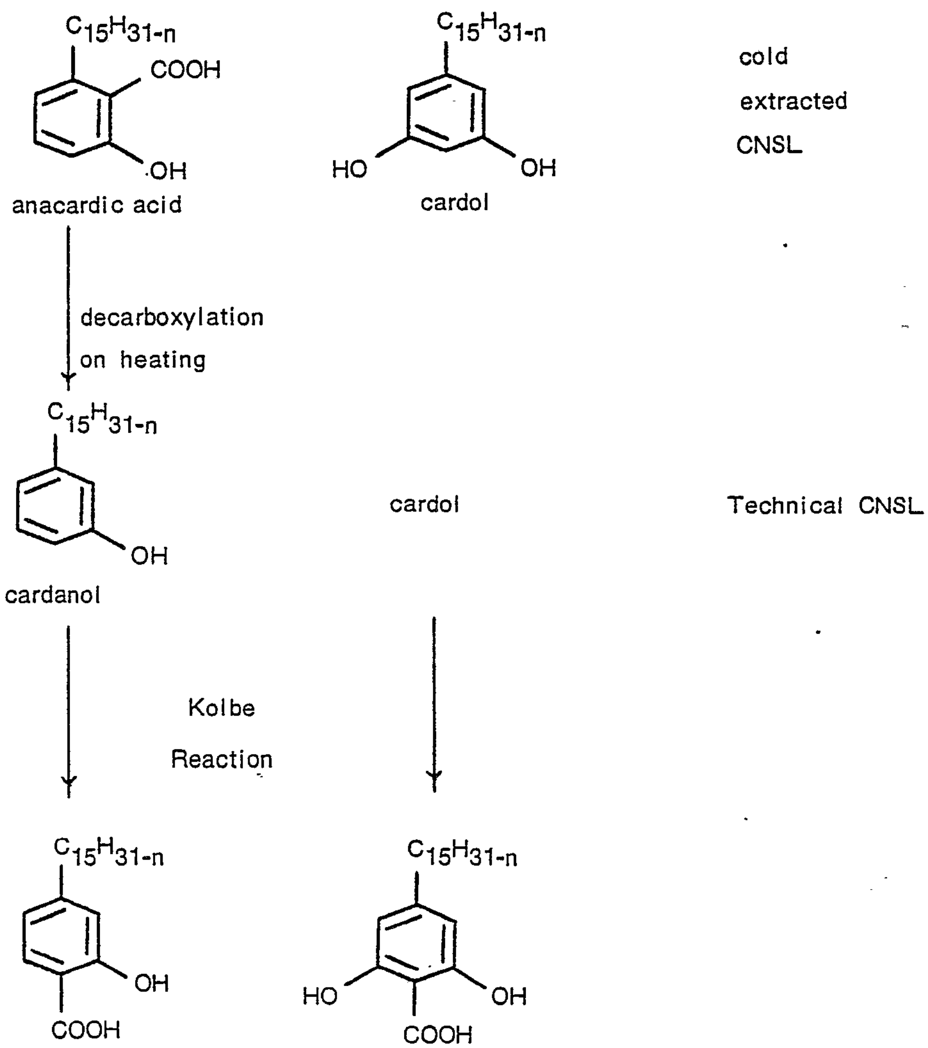

In practice the salt of the compound of formula (I) is usually mixed with the aldehyde to produce a single formulation, preferably in an aqueous diluent. Typical formulations contain for each mole of compound of formula (I), from 1 to 5 moles of aldehyde and optionally up to 2 moles of alkali metal hydroxide, e.g. sodium or potassium hydroxide. The solids content of the formulations is generally between 25 and 50%.

Suitable aldehydes for use in the invention include formaldehyde, preferably in the form of paraformaldehyde, acetaldehyde and furfuraldehyde. Other low molecular weight aldehydes may also be used.

The polymer is formed by the reaction of the salt of the compound of formula (I) and the aldehyde at a temperature insufficient to decarboxylate the product preferably at ambient temperature. The salt may be prepared in situ in the reaction medium by reaction of a compound of formula (I) with an alkali metal hydroxide. Alkaline conditions are preferred for the polymerization.

The polymer of the invention is suitable for use as a binder or adhesive in many applications.

Particles or fibres which may be bonded by the polymer of the invention include cellulosic materials, for example cashew nut shell, flax, hemp, jute, sugar cane and cotton stalks, and siliceous materials. Wood chips are however of special interest for the production of particle board, such chips being normally no greater than 30 mm in length.

Although the fibres or particles may be treated with the binder formulation at elevated temperatures, e.g. up to 65°C, ambient temperatures are generally preferable. It is usually convenient for the particles or fibres to be treated with binder formulation in the form of a spray and the temperature thereof is dependent on the viscosity of the solution. It will be appreciated that whilst polymerization may take place wholly after treatment of the particles or fibres with the binder formulation, polymers may form to a limited extent on storage of the formulation and this may be tolerable provided that the treatment operation, for example the spraying of the particles or fibres, is not adversly affected.

The relative amounts of binder formulation and particles or fibres are of course chosen in accordance with the properties required in the finished material. For guidance however the amounts of the wood chips and binder are generally chosen so as to yield a wood particle material with a resin content between 6 and 12% w/w. Particle board is of course produced by heat treating pressed wood chips treated with the binder and the applied pressure is usually chosen so as to give a board density at least 400 kg/m$^3$. The temperature at which bonding is effected is normally no greater than 250°C and preferably no greater than 150°C, the pressing time desirably being no greater than 15 minutes.

At high pressing temperatures significant decarboxylation of the polymer may take place as indicated above. Such decarboxylation may be desirable in reducing the water absorptive characteristics of the polymer binder.

The invention will now be illustrated by the following Examples. Examples 1 and 2 are outside the scope of the invention.

Example 1

8 g of the sodium salt of saturated cardanol:

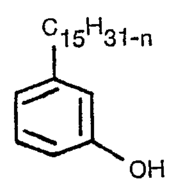

n = 0

were dissolved in 16 ml of diglym (2,2'-dimethoxydiethylether). The solution was maintained at 155 to 160°C for $2\frac{1}{2}$ hours during which carbon dioxide was passed through the solution. The product was isolated by recovery of the diglym, cooling of the reaction mixture, dilution with water and acidification. The pure carboxylic acid was isolated by recrystallisation and was characterised by elemental analysis and its spectroscopic and chromatographic properties. The isolated product was consistent with the structure 4-pentadecyl-salicyclic acid and exhibited a melting point of 89 to 90°C.

| | C% | H% |
|---|---|---|
| Found | 76.25 | 10.54 |
| Calculated | 75.86 | 10.34 |

The above procedure was repeated using the sodium salt of saturated cardol

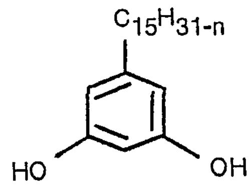

n = 0

with a heating period of 1 hour. The isolated product was consistent with the structure 5-pentadecylresorcinol-2-carboxylic acid and exhibited a melting point of 140 to 141°C.

Extended Analysis:

| | C% | H% |
|---|---|---|
| Found | 72.72 | 10.15 |
| Calculated | 72.55 | 9.89 |

Additional experiments were conducted using mixed cardanol (n = 0, 2, 4, 6) and mixed cardol (n = 0, 2, 4, 6) and using pure saturated cardol mixed with $K_2CO_3$ in water. The results are reported in Table 1.

TABLE I

| Substance/Amount (g) | Solvent/Amount ($cm^3$) | Reaction temp (°C) | Heating time (hours) | Yield (%) |
|---|---|---|---|---|
| Saturated cardanol 8 | Diglyme 16 | 155–160 | 2½ | 50 |
| Saturated cardol 8 | Diglyme 16 | 155–160 | 1 | 100 |
| Saturated cardol 2 | Water 20 | 100 | 3 | 50 |
| Mixed cardol 16 | Diglyme 32 | 155–160 | 1 | 100 |
| Mixed cardanol 15 | Diglyme 20 | 155–160 | 2½ | 50 |

Example 2

In this preparation Technical cashew nut shell liquid (CNSL) containing approximately 85% mixed cardanol and 15% mixed cardol with a little 2-methyl-cardol was carbonated. For the purpose of the experiment the molecular weight of the reactants was taken to be 302.

A three-necked reaction vessel equipped with mechanical stirrer, carbon dioxide gas inlet and condenser adjustable for reflux or distillation was charged with methanol (1000 $cm^3$) containing sodium methoxide from sodium (23 g) and Technical CNSL (302 g) added. To the mixture diglyme (600 g) was introduced and the methanol removed by distillation. Towards the end of the recovery the admission of carbon dioxide was commenced. As removal of the remaining methanol occurred the reaction temperature rose to 170° and was maintained at this point for four hours while carbon dioxide was continuously passed into the reaction mixture.

The course of the reaction was monitored by withdrawal of samples and examination of the acidified and recovered products by thin layer chromatography. When the amount of cardanol and cardol had significantly been reduced the reaction was judged to be complete. The condenser was then adjusted for distillation and the diglyme substantially removed over a period of 2 hours during which the temperature of the reaction rose to about 190°C and the passage of carbon dioxide was continued. The mixture was cooled

with continued carbon dioxide admission and, at ambient temperature, was diluted with water to dissolve the product, the solution acidified and solvent extracted to give carboxylated CNSL.

Thin layer chromatographic examination indicated the presence of a polar product with little cardanol and cardol remaining. Infrared spectroscopic examination gave $v_{(max)}$ at 3550 $cm^{-1}$ (OH absorption) and 1750 $cm^{-1}$ (carbonyl absorption) with other additional bands in other regions.

The 'H NMR spectrum (carbon tetrachloride solution) showed hydrogen-bonded OH-------$HO_2C$ absorption (exchangeable $D_2O$) at $\tau$ 7.63—7.77 and olefinic absorption unchanged in the region 4.80—5.45 comparable with that of Technical CNSL, indicating the presence of —CH=CH— and —$CH=CH_2$ unsaturation. Argentation thin layer chromatography showed the presence of (monoene), diene and triene constituents of cardanol and cardol.

Example 3

The product of Example 2 was polymerized in the following way. The carboxylated CNSL (5.0 g) was heated at 80°C with the addition of sodium hydroxide (0.25 g) in water (12 $cm^3$) and paraformaldehyde (1.0 g). An insoluble polymer wasc.0 g). An insoluble polymer was gradually formed and precipitated from solution. When this material was isolated and then heated at 200°C the evolution of carbon dioxide was observed. Similar polymerization reactions were performed as reported in Table 2.

TABLE 2

| Substance | Amount g | Water ml | NaOH g | PFA g | Bath Temp. °C | Heating Time min. |
|---|---|---|---|---|---|---|
| Anacardic Acid | 1.0 | 3.5 | 0.1 | 0.4 | 200 | 15 |
| Carboxy Cardanol | 0.6 | 2.0 | 0.06 | 0.3 | 200 | 15 |
| Carboxy Cardol | 1.0 | 3.5 | 0.1 | 0.4 | 200 | 15 |

Example 4

*Binder Formulation*

A formulation was prepared from CNSL solution containing natural CNSL (930 g), caustic soda (100 g) made up to 2,700 $cm^3$, (the density is 1.002). Paraformaldehyde (166 g) was thoroughly mixed with the CNSL solution.

*Production of Particle Board*

1600 g chips of Scots Pine 30 mm in length × 0.6 mm thickness, dried to 5% moisture content were sprayed with a reduced amount of the above formulation containing 287 g of the above solution mixed with 18 g paraformaldehyde at room temperature from a spray gun whilst the chips were contained in a rotating bin. The nominal resin solids content of the board was approximately 8%. The sprayed chips (1730 g) with a moisture content of 11% were hand spread onto a plate provided with a circumferential former approximately 6 inches high. The chips were consolidated by cold pressing and the former removed to leave a mat which was then provided with a top plate and the whole placed in a platen press, the top and bottom plates of which were maintained at 260°C. Pressing was maintained for 35 minutes and after 2 minutes the temperature rose from approximately 20°C to 100°C and then over the next 33 minutes to 260°C. The properties of the product are reported in Table 3.

Example 5

The process of Example 4 was repeated except that in this case the particles were dried to 1% moisture content, 1600 g chips, 341 g solution and 21 g paraformaldehyde were employed (nominal resin content 9.5%). The moisture content of the sprayed chips was 9%. In this case the platen pressure was released for 15 seconds at 3 minutes and 5 minutes from the commencement of pressing to allow release of steam. The results are reported in Table 3.

TABLE 3

| Example No. | Moisture Content % | | Resin % | Resin Temp. °C | Board Density $Kg/m^3$ | Modulus of Rupture $MN/m^2$ | Tensile strength perpen-dicular $MN/m^2$ | Water Absorption 1 hour % | Thickness swelling % | Pressing time mins. |
|---|---|---|---|---|---|---|---|---|---|---|
| | Dried Particle | Sprayed 'Chips' | | | | | | | | |
| 4 | 5 | 11.0 | 8 | Room | 590 | 12.5 | 0.19 | 13.8 | 5.3 | 35 |
| 5 | 1 | 9 | 9.5 | Room | 614 | 17.8 | 0.41 | 11.7 | 4.9 | 31 |
| BS*2604 1970 (comparison) | N/A** | N/A | N/A | N/A | Min 480 | 13.8 | 0.34 | — | 12.0 | N/A |

* British Standard

** not applicable

**Claims**

1. A polymer containing carboxylate groups characterised in that it is formed by polymerization of a water-soluble salt of a compound of the formula:

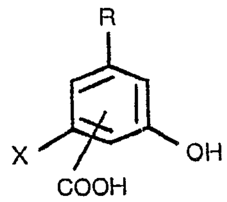

(I)

in which

R represents $C_{15}H_{31-n}$, $C_{17}H_{35-n}$ or $C_{11}H_{23}$ in which n is 0, 2, 4 or 6, and

X represents H or OH,

with an aldehyde.

2. A polymer as claimed in Claim 1 characterised in that the aldehyde is selected from formaldehyde, paraformaldehyde, acetaldehyde and furfuraldehyde, and the compound of formula (I) is selected from pelandjauic acid, anagigantic acid, anacardic acid, 4-pentadecylsalicyclic acid, 5-pentadecylresorcinol-2-carboxylic acid and mixtures thereof.

3. A method of preparing a polymer containing carboxyl groups characterised in that a water-soluble salt of a compound of the formula:

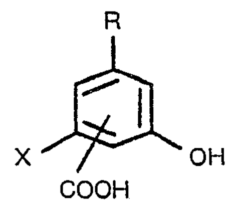

(I)

in which

R represents $C_{15}H_{31-n}$, $C_{17}H_{35-n}$ or $C_{11}H_{23}$ in which n is 0, 2, 4 or 6, and

X represents H or OH,

is reacted with an aldehyde in a molar ratio of from 1:1 to 1:5 respectively, at a temperature insufficient to decarboxylate the product.

4. A method as claimed in Claim 3 characterised in that the salt of the compound of formula (I) is prepared in situ by reaction of a compound of formula (I) with an alkali metal hydroxide in a molar ratio up to 1:2 respectively.

5. A method as claimed in Claim 3 or Claim 4 characterised in that the aldehyde is selected from formaldehyde, paraformaldehyde, acetaldehyde and furfuraldehyde and the compound of formula (I) is selected from pelandjauic acid, anagigantic acid, anacardic acid, 4-pentadecyl-salicyclic acid, 5-pentadecylresorcinol-2-carboxylic acid and mixtures thereof.

6. A method as claimed in any of claims 3 to 5 characterised in that the compound of formula (I) is in the form of cashew nut shell liquid obtained by cold solvent extraction from the shells.

7. A method as claimed in any of claims 3 to 5 characterised in that the compound of formula (I) is in the form of carboxylated Technical cashew nut shell liquid.

8. A formulation comprising a water-soluble salt of a compound of the formula:

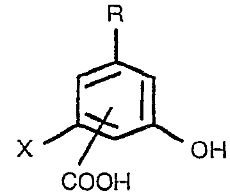

(I)

in which

R represents $C_{15}H_{31-n}$, $C_{17}H_{35-n}$ or $C_{11}H_{23}$ in which n is 0, 2, 4 or 6, and

X represents H or OH,

and an aldehyde in a molar ratio of from 1:1 to 1:5 respectively, in an aqueous diluent.

9. A formulation as claimed in Claim 8 characterised in that the aldehyde is selected from formaldehyde, paraformaldehyde, acetaldehyde and furfuraldehyde, and the compound of formula (I) is

selected from pelandjauic acid, anagigantic acid, anacardic acid, 4-pentadecylsalicyclic acid, 5-pentadecylresorcinol-2-carboxylic acid and mixtures thereof.

10. A material comprising particles and/or fibres which are bonded together characterised in that the bonding is effected by a polymer containing carboxylate groups which is formed by polymerization of a water-soluble salt of a compound of the formula:

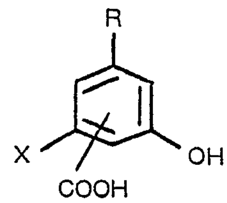

in which

R represents $C_{15}H_{31-n}$, $C_{17}H_{35-n}$ or $C_{11}H_{23}$ in which n is 0, 2, 4 or 6, and

X represents H or OH,

with an aldehyde.

11. A material as claimed in Claim 10 characterised in that the particles and/or fibres comprise cellulosic or siliceous materials.

12. A method of preparing bonded particulate and/or fibrous material comprising treating said particles and/or fibres with a formulation as claimed in Claim 8 or Claim 9, shaping the resulting mix and allowing the diluent to evaporate and the components to polymerize.

**Patentansprüche**

1. Ein carboxylatgruppenenthaltendes Polymer, dadurch gekennzeichnet, daß er durch Polymerisieren eines wasserlöslichen Salzes einer Verbindung mit der Formel

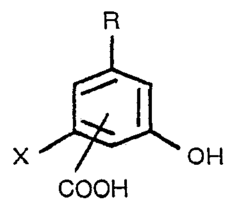

(I)

in der

R für $C_{15}H_{31-n}$, $C_{17}H_{35-n}$ oder $C_{11}H_{23}$ steht,

n 0, 2, 4 oder 6 ist und

X H oder OH entspricht,

mit einem Aldehyd gebildet wird.

2. Ein Polymer im Einklang mit Anspruch 1 dadurch gekennzeichnet, daß der Aldehyd Formaldehyd, Paraformaldehyd, Acetaldehyd oder Furfuraldehyd ist, und die Verbindung der Formel (I) Pelandjauinsäure, Anagigantinsäure, Anacardinsäure, 4-Pentadecylsalicyclinsäure, 5-Pentadecylresorcinol-2-Carbonsäure oder ein Gemisch davon.

3. Ein Verfahren zur Herstellung eines carboxylgruppenenthaltenden Polymers, dadurch gekennzeichnet, daß ein wasserlösliches Salz einer Verbindung der Formel

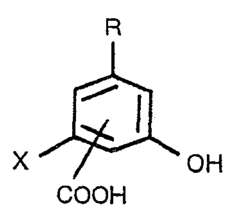

(I)

in der

R für $C_{15}H_{31-n}$, $C_{17}H_{35-n}$ oder $C_{11}H_{23}$ steht,

n 0, 2, 4 oder 6 ist und

X H oder OH entspricht

mit einem Aldehyd in einem Molverhältnis von 1:1 bis 1:5 respektive zur Reaktion gebracht wird, und zwar bei einer Temperatur, die nicht ausreichend ist, um das Produkt zu decarboxylieren.

4. Ein Verfahren im Einklang mit Anspruch 3, dadurch gekennzeichnet, daß das Salz der Verbindung

der Formel (I) an Ort und Stelle durch Reaktion einer Verbindung der Formel (I) mit einem Alkalimetallhydroxid in einem Molverhältnis bis 1:2 respektive präpariert wird.

5. Ein Verfahren im Einklang mit Anspruch 3 oder Anspruch 4, dadurch gekennzeichnet, daß der Aldehyd Formaldehyd, Paraformaldehyd, Acetaldehyd oder Furfuraldehyd und die Verbindung der Formel (I) Pelandjauinsäure, Anagigantinsäure, Anacardinsäure, 4-Pentadecylsalicyclinsäure, 5-Pentadecylresorcinol-2-Carbonsäure oder ein Gemisch davon ist.

6. Ein Verfahren im Einklang mit einem oder mehreren der Ansprüche 3 bis 5, dadurch gekennzeichnet, daß die Verbindung der Formel (I) in der Form von durch Kaltlösungsextraktion aus den Schalen gewonnener Acajounuß-Schalenflüssigkeit ist.

7. Ein Verfahren im Einklang mit einem oder mehreren der Ansprüche 3 bis 5, dadurch gekennzeichnet, daß die Verbindung der Formel (I) in der Form carboxylierter technischer Acajounuß-Schalenflüssigkeit ist.

8. Ein Ansatz aus einem wasserlöslichen Salz einer Verbindung der Formel

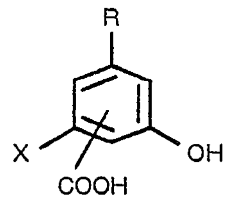

in der

R für $C_{15}H_{31-n}$, $C_{17}H_{35-n}$ oder $C_{11}H_{23}$ steht,
n 0, 2, 4 oder 6 ist und
X H oder OH entspricht

und einem Aldehyd in einem Molverhältnis von 1:1 bis 1:5 respektive, in einem wässerigen Verdünnungsmittel.

9. Ein Ansatz im Einklang mit Anspruch 8, dadurch gekennzeichnet, daß der Aldehyd Formaldehyd, Paraformaldehyd, Acetaldehyd oder Furfuraldehyd und die Verbindung der Formel (I) Pelandjauinsäure, Anagigantinsäure, Anacardinsäure, 4-Pentadecylsalicyclinsäure, 5-Pentadecylresorcinol-2-Carbonsäure oder ein Gemisch davon ist.

10. Ein Material, das Teilchen und/oder Fasern enthält, die miteinander verbunden sind, dadurch gekennzeichnet, daß die Verbindung durch ein carboxylatgruppenenthaltendes Polymer bewirkt wird, das durch das Polymerisieren eines wasserlöslichen Salzes einer Verbindung der Formel

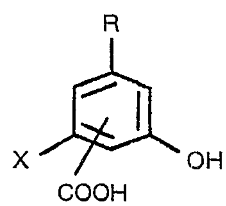

in der

R für $C_{15}H_{31-n}$, $C_{17}H_{35-n}$ oder $C_{11}H_{23}$ steht,
n 0, 2, 4 oder 6 ist und
X H oder OH entspricht

mit einem Aldehyd gebildet wird.

11. Ein Material im Einklang mit Anspruch 10, dadurch gekennzeichnet, daß die Teilchen und/oder Fasern celluloseartige oder kieselsäurehaltige Stoffe enthalten.

12. Ein Verfahren zum Präparieren gebundener teilchenförmiger und/oder faseriger Stoffe, wobei die besagten Teilchen und/oder Fasern mit einem Ansatz im Einklang mit Anspruch 8 oder Anspruch 9 behandelt werden, das auf diese Weise erzielte Gemisch geformt wird und man das Verdünnungsmittel verdampfen und die Teile polymerisieren läßt.

**Revendications**

1. Un polymère contenant des groupes carboxyliques caractérisé en ce qu'il est formé par la polymérisation d'un sel soluble à l'eau d'un composé de la formule:

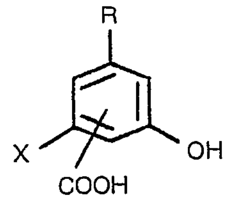

(I)

dans laquelle

R représente $C_{15}H_{31-n}$, $C_{17}H_{35-n}$ ou $C_{11}H_{23}$ dans laquelle n est 0, 2, 4 ou 6, et

X représente H ou OH,

avec un aldéhyde.

2. Un polymère tel que revendiqué en Revendication 1 qui se caractérise en ce que l'aldéhyde est sélectionné d'aldéhyde formique, de paraformaldéhyde, d'aldéhyde acétique, et de furfuraldéhyde, et le composé de la formule (I) est sélectionné d'acide pelandjauic, d'acide anagigantic, d'acide anacardic, d'acide 4-pentadécyle-salicyclique, d'acide 5-pentadécyle-résorcinol-2-carboxylique et des mélanges des précités.

3. Un procédé pour la préparation d'un polymère contenant des groupes carboxyliques en ce qu'un sel soluble à l'eau d'un composé de la formule:

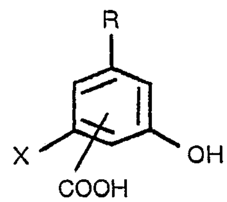

(I)

dans laquelle

R représente $C_{15}H_{31-n}$, $C_{17}H_{35-n}$ ou $C_{11}H_{23}$ dans laquelle n est 0, 2, 4 ou 6, et

X représente H ou OH,

est entré en réaction avec un aldéhyde dans un rapport molaire de 1:1 à 1:5 respectivement, à une température insuffisante pour la décarboxylation du produit.

4. Un procédé tel que revendiqué en Revendication 3 qui se caractérise en ce que le sel du composé de la formule (I) est préparé in situ par la réaction d'un composé de la formule (I) avec un hydroxyde métallique alcalin d'un rapport molaire allant respectivement jusqu'à 1:2.

5. Un procédé tel que revendiqué en Revendication 3 ou Revendication 4 qui se caractérise en ce que l'aldéhyde est sélectionné d'aldéhyde formique, de paraformaldéhyde, d'aldéhyde acétique et de furfuroldéhyde, et le composé de la formule (I) est sélectionné d'acide pelandjauic, d'acide 4-pentadécyle-salicyclique, d'acide 5-pentadécyl-résorcinol-2-carboxylique et des mélanges des précités.

6. Un procédé tel que revendiqué d'après l'une quelconque des revendications 3 à 5 qui se caractérise en ce que le composé de la formule (I) est sous forme de liquide de coquille de noix d'acajou obtenu par extraction à froid d'un solvant des coquilles.

7. Un procédé tel que revendiqué d'après l'une quelconque des revendications 3 à 5 qui se caractérise en ce que le composé de la formule (I) est sous forme de liquide technique de coquille de noix d'acajou carboxylé.

8. Une formulation qui comprend un sel soluble à l'eau d'un composé de la formule:

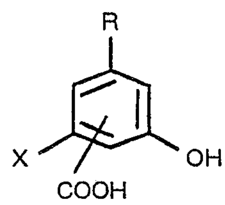

(I)

dans laquelle

R représente $C_{15}H_{31-n}$, $C_{17}H_{35-n}$ ou $C_{11}H_{23}$ dans laquelle n est 0, 2, 4 ou 6, et

X représente H ou OH,

et un aldéhyde dans un rapport molaire de 1:1 à 1:5 respectivement dans un diluant aqueux.

9. Une formulation telle que revendiquée en Revendication 8 qui se caractérise en ce que l'aldéhyde est sélectionné d'aldéhyde formique, de paraformaldéhyde, d'aldéhyde acétique et de furfuroldéhyde, et le composé de la formule (I) est sélectionné d'acide pelandjauic, d'acide anagigantic, d'acide anacardic, d'acide 4-pentadécyle-salicyclique, d'acide 5-pentadécyle-résorcinol-2-carbolique et des mélanges des précités.

10. Une matière comprenant des particules et/ou des fibres liées ensemble qui se caractérise en ce que la liaison est effectuée par un polymère à teneur de groupes carboxyliques formé par la polymérisation d'un sel soluble à l'eau d'un composé de la formule:

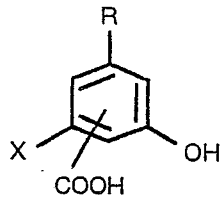

dans laquelle

R représente $C_{15}H_{31-n}$, $C_{17}H_{35-n}$ ou $C_{11}H_{23}$ dans laquelle n est 0, 2, 4 ou 6, et

X représente H ou OH,

avec un aldéhyde.

11. Une matière telle que revendiquée en Revendication 10 qui se caractérise en ce que les particules et/ou les fibres comprennent des matières cellulosiques ou siliceuses.

12. Un procédé pour préparer des particules liées et/ou de la matière fibreuse qui comprend le traitement desdites particules et/ou fibres par une formulation revendiquée en Revendication 8 ou Revendication 9, mettant au point le mélange résultant et permettant l'évaporation du diluant et la polymérisation des constituantes.